(19) Europäisches Patentamt
European Patent Office
Office européen des brevets

(11) **EP 4 230 056 A1**

(12) **EUROPEAN PATENT APPLICATION**

(43) Date of publication:
**23.08.2023 Bulletin 2023/34**

(21) Application number: **22382836.9**

(22) Date of filing: **09.09.2022**

(51) International Patent Classification (IPC):
**A23K 20/105** (2016.01)   **A23K 20/20** (2016.01)
**A23K 20/24** (2016.01)   **A23K 50/15** (2016.01)
**A23K 20/111** (2016.01)   **A23K 20/137** (2016.01)
**A23K 20/22** (2016.01)   **A23K 50/10** (2016.01)

(52) Cooperative Patent Classification (CPC):
**A23K 50/15; A23K 20/105; A23K 20/111;
A23K 20/137; A23K 20/22; A23K 20/24;
A23K 50/10**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.02.2022 EP 22157277
03.06.2022 EP 22382539**

(71) Applicant: **Yara International ASA
0277 Oslo (NO)**

(72) Inventors:
 • **RUIZ, Isabel
 E-28806 Alcalá de Henares, Madrid (ES)**

 • **MARTÍNEZ-LUENGAS, Inés
 E-28223 Pozuelo de Alarcón, Madrid (ES)**
 • **PIRRO, Laura
 NL-4541 HJ Terneuzen (NL)**
 • **VAN BELZEN, Ruud
 NL-4541 HJ Terneuzen (NL)**
 • **MOHAN, Anand
 NL-4541 HJ Terneuzen (NL)**
 • **IPHARRAGUERRE, Ignacio R.
 E-08461 Sant Esteve de Palautordera, Barcelona (ES)**

(74) Representative: **ABG Intellectual Property Law,
S.L.
Avenida de Burgos, 16D
Edificio Euromor
28036 Madrid (ES)**

(54) **USE OF A RUMINANT FEED SUPPLEMENT COMPOSITION AS A NON-PROTEIN NITROGEN SOURCE TO IMPROVE RUMEN FERMENTATION, THE PRODUCTIVITY AND PERFORMANCE OF THE RUMINANT ANIMALS AND THE ENTERIC METHANE EMISSION**

(57) The present disclosure relates to the use of a ruminant feed supplement composition comprising urea, biuret and N-containing by-products of the biuret production out of urea, as a NPN-source to reduce methane emission produced by ruminant animals, as well as to improve the dry matter intake (DMI) of ruminant animals. The present disclosure further relates to the use of a ruminant feed supplement composition comprising urea, biuret, N-containing by-products of the biuret production out of urea and one or more nitrate compounds as a NPN-source to improve nitrogen nutrition and to reduce methane emission of ruminant animals, also the use to improve the average daily gain (ADG) of ruminant animals and the use to improve the feed efficiency of ruminant animals.

**Description**

**Technical field**

The present disclosure relates to a ruminant feed supplement composition. The present disclosure further relates to the use of such a ruminant feed supplement composition as a dietary non-protein nitrogen (NPN) source to improve nitrogen nutrition and to reduce methane emission by ruminant animals.

**Background art**

Ruminants are defined as large hoofed herbivorous grazing or browsing mammals that are able to acquire nutrients from plant-based feed by digesting it in a specialized stomach having four compartments, one of which is the rumen. Thanks to the microbial actions in the rumen prior to digestion, ruminants have the unique ability to use (low quality) protein sources and also NPN sources. NPN sources provide nitrogen for ruminants, especially in low-protein diets. This gives ruminant animals a competitive advantage over other domesticated animals. The symbiotic relationship with the rumen microflora allows ruminants to upcycle nutrients to produce highly nutritious animal proteins, by means of an efficient pre-gastric fermentation of feeds, which takes place in the reticulorumen, the largest compartment of their gastrointestinal tract. Ruminants provide an optimum environment for microorganisms to thrive, and they, in turn, supply the ruminant host with microbial crude protein, which is of high quality in terms of amino acids supplement. In beef and dairy production systems, the microbial crude protein synthesized in the rumen provides the majority of the metabolizable protein required by the animal.

Increased utilization of N for bacterial synthesis and capture of dietary N into anabolic products, particularly absorbed amino acids, may be influenced by dietary manipulation, mainly by energy levels in the ration. However, there is an upper limit to the overall efficiency of the process: a maximum of 50 to 60% of dietary N, or 70 to 90% of apparent digested N will be converted into amino acids and released into the portal vein. For this reason, particularly in beef cattle diets, it is extremely important to assess the optimum kinetics of N release in NPN sources for each energy source (e.g., basal forage diet, supplemental by-products, etc.) to maximize N utilization and minimize excretion.

In most beef production systems, several grains and grain byproducts are available as supplemental protein sources. However, on a per kg of N supplied, it is nearly impossible to compete with the lower costs of supplemental crude protein in the form of NPN. Urea is the most commonly known source of NPN used in ruminant nutrition. It is however usually not included in more than 1 wt.% of the diet. Any shortage of protein in a diet or supplementation program is frequently covered by the use of urea-based supplements in the form of range cubes, liquid or pelleted supplements and tubs. Apart from urea, other ammonia forming chemical compounds such as biuret and ammonium sulfate have been used in the formulation of ruminal diets to replace part of plant protein sources and providing adequate amounts of ruminal degradable protein for a better efficiency of fiber digestion and the synthesis of microbial protein.

However, some challenges related to the rapid release of N mainly by urea, limit its use as the most cost effective NPN source. In recent years, several slow-release urea products have been developed and tested in ruminant nutrition with variable results. Currently, there is growing interest in decreasing the environmental impact of ruminant production, including beef and dairy, and many strategies are being pursued to achieve this goal.

In the current ruminant feeding systems, methane ($CH_4$) production is an inevitable consequence of fermentative digestion. The microbial consortium of the rumen must dispose hydrogen that is produced during fermentation. Otherwise, hydrogen would accumulate in the rumen and thereby inhibit fermentation of ingested feeds. Therefore, the rumen microbial system is provided with methanogens that reduce carbon dioxide ($CO_2$) to methane.

The major hydrogen (electron) sink in the rumen is methane produced by the reduction of carbon dioxide using reduced co-enzymes such as NADH as the electron source. Methane is however an energy loss for ruminants and a potent greenhouse gas, which is a 28-times greater global warming potential than carbon dioxide.

Globally, ruminants produce some 80 million tons of methane annually, accounting for some 28% of manmade methane emission. The adoption of ruminant management practices which result in major reductions of release of methane are consequently high priority.

It is a goal of the present disclosure to provide in NPN-sources for ruminants useful for improving the rumen fermentation, the productivity and the performance of the ruminant animals, and the enteric methane emission, especially in low crude protein diets.

**Summary**

According to an aspect of the present disclosure, the use of a ruminant feed supplement composition comprising urea, biuret and N-containing by-products of the biuret production out of urea, as a NPN-source to reduce methane emission produced by ruminant animals is disclosed.

It has been observed that the supplementation of the ruminant feed with urea, biuret and N-containing by-products of the biuret production out of urea, reduces methane emission without compromising or even improving their performance.

According to a further aspect of the present disclosure, the use of a ruminant feed supplement composition comprising urea, biuret and N-containing by-products of the biuret production out of urea as a NPN-source to improve the dry matter intake (DMI) of ruminant animals is disclosed.

In a possible use according to the present disclosure, the ruminant feed supplement composition comprises between 30 and 60 wt.% of urea and between 30 and 60 wt.% of biuret, based on the total weight % of the composition.

More in particular, the ruminant feed supplement composition comprises between 35 and 55 wt.% of urea and between 35 and 50 wt.% of biuret, based on the total weight of the composition.

Most particularly, the ruminant feed supplement composition comprises between 37 and 52 wt.% of urea and between 39 and 46 wt.% of biuret, based on the total weight of the composition.

In a particular use according to the present disclosure, the ruminant feed supplement composition comprises between 5 and 30 wt.% of N-containing by-products of the biuret production out of urea, based on the total weight of the composition.

In a specific use according to the present disclosure, the ruminant feed supplement composition further comprises

- between 2.5 and 8 wt.% of triuret, and / or
- between 0.1 and 5 wt.% of ammelide, and / or
- between 2.5 and 15 wt.% of cyanuric acid, and
- between 0.1 and 2.0 wt.% of moisture,

based on the total weight of the composition.

A further use according to the present disclosure relates to the use of a ruminant feed supplement composition comprising urea, biuret, N-containing by-products of the biuret production out of urea, and a (one or more) nitrate compound(s) as a NPN-source to improve nitrogen nutrition and to reduce methane emission of ruminant animals.

Another use according to the present disclosure relates to the use of a ruminant feed supplement composition comprising urea, biuret, N-containing by-products of the biuret production out of urea, and a nitrate compound to improve the feed efficiency of ruminant animals.

In a particular use of a ruminant feed supplement according to the present disclosure, the ruminant feed supplement composition comprises between 5 and 60 wt.% of urea, between 2 and 60 wt.% of biuret and between 21 and 37 wt.% of one or more nitrate compounds, based on the total weight of the composition.

More in particular, the ruminant feed supplement composition comprises between 20 and 40 wt.% of urea, between 20 and 40 wt.% of biuret and between 21 and 37 wt.% of one or more nitrate compounds, based on the total weight of the composition.

Most in particular, the ruminant feed supplement composition comprises between 25 and 35 wt.% of urea, between 25 and 35 wt.% of biuret and between 23.5 and 31.5 t.% of one or more nitrate compounds.

The one or more nitrate compounds are more specific water-soluble nitrate salts.

The water-soluble nitrate salts can more in particular be chosen out of calcium nitrate ($Ca(NO_3)_2$), magnesium nitrate ($Mg(NO_3)_2$), ammonium nitrate ($NH_4NO_3$), potassium nitrate ($KNO_3$) and / or sodium nitrate ($NaNO_3$).

In a possible use according to the present disclosure, the ruminant feed supplement composition comprises between 20 and 32 wt.% of calcium nitrate and between 1 and 5 wt.% of ammonium nitrate, based on the total weight of the composition.

The ruminant feed supplement composition more specifically comprises

- between 1 and 5 wt.% of triuret,
- between 0.5 and 3 wt.% of ammelide,
- between 3 and 30 wt.% of cyanuric acid, and
- between 0.1 and 4.5 wt.% of moisture,

based on the total weight of the composition.

## Description of the figures

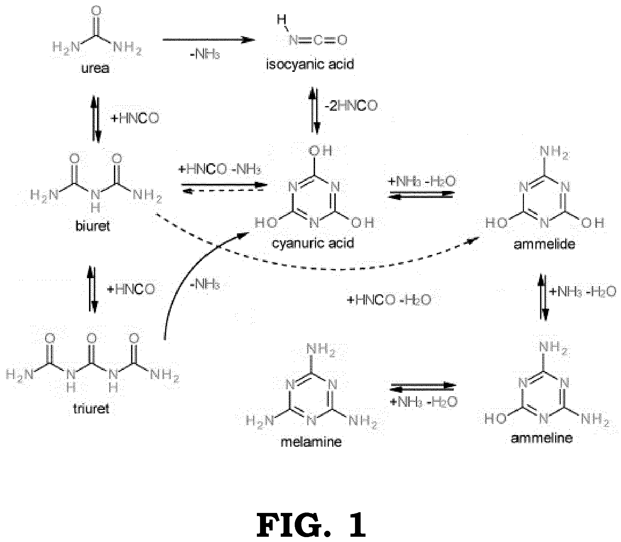

FIG. 1 shows an overview of the reactions involved in the production of biuret from urea, including the formation of by-products.

**Detailed description**

The present inventors have surprisingly found that specific NPN compositions (or mixtures) for ruminant animals, comprising urea, biuret, and one or more N-containing by-products of a urea condensation process or a biuret production process, have many advantages when incorporated in the diet of ruminant animals and thus are fed to the ruminant animals, i.e.

(1) reduction of methane emission produced by ruminant animals.
(2) improvement of the dry matter intake (DMI) of ruminant animals.

Biuret is typically formed through a non-catalytic thermal decomposition of urea. The main reaction and the side reactions in biuret production are known to the skilled person and they are represented in FIG. 1. When urea is heated to temperatures above its melting point, ammonia is slowly evolved. If the temperature range is limited slightly above the normal melting point of urea, i.e. 132 °C, biuret is formed. When heating the urea melt further, several other different "N-containing compounds" or "N-containing by-products" are formed, but this in very small amounts. These N-containing by-products resulting out of the thermal decomposition of urea (also called the urea condensation process) encompass amongst others cyanuric acid, triuret, ammelide, etc. These by-products are poorly hydrolysed in the rumen. Cyanuric acid and triuret are, just like biuret, non-toxic for the ruminants and give as good nitrogen retention figures as biuret does. Ammelide is an unavoidable by-product in the production of the necessary amount of biuret. The amount of ammelide however needs to be limited since it can be toxic in higher doses.

This ruminant feed supplement composition particularly comprises between 60 wt.% and 95 wt.% of urea and biuret, and between 5 wt.% and 40 wt.% of N-containing by-products, based on the total weight of the composition or mixture. Even more in particular, the composition comprises between 70 wt.% and 95 wt.% or between 75 wt.% and 95 wt.% of urea and biuret, and between 5 wt.% and 30 wt.% or between 5 wt.% and 25 wt.% of N-containing by-products, based on the total weight of the composition or mixture.

In particular embodiments, the composition comprises between 30 and 60 wt.% of urea and between 30 and 30 60 wt.% of biuret, more in particular between 35 and 55 wt.% of urea and between 35 wt.% and 50 wt.% of biuret, even more in particular between 37 and 52 wt.% or between 40 and 50 wt.% of urea and between 39 and 46 wt.% or between 40 and 15 wt.% of biuret, based on the total weight of the composition.

In certain embodiments, the ruminant feed supplement composition further comprises between 5 wt.% and 30 wt.% of N-containing by-products, in particular between 5 wt.% and 25 wt.% of N-containing by-products, based on the total weight of the composition. In certain embodiments the N-containing by-products comprise one or more of triuret, ammelide and cyanuric acid.

In certain embodiments, the ruminant feed supplement composition comprises, as N-containing by-products,

- between 2.5 wt.% and 8 wt.% of triuret, more in particular between 3 and 6 10 wt.% of triuret; and / or
- between 0.1 and 5 wt.% of ammelide, more in particular between 0.5 and 3 wt.% of ammelide; and / or
- between 2.5 and 15 wt.% of cyanuric acid, more in particular between 3 and 10 wt.% of cyanuric acid,

based on the total weight of the composition or mixture.

In certain embodiments, the ruminant feed supplement composition further comprises between 0.1 and 2 wt.% moisture (water), more in particular between 0.1 and 1.5 wt.% moisture, based on the total weight of the composition or mixture.

Particular embodiments of the ruminant feed supplement composition comprise

- between 30 and 60 wt.% of urea, more in particular between 35 and 55 wt.% of urea, even more in particular between 37 and 52 wt.% of urea,
- between 30 and 60 wt.% of biuret, more in particular between 35 and 50 wt.% of biuret, even more in particular between 39 and 46 wt.% of biuret,
- between 3 and 6 wt.% of triuret,
- between 0.5 and 3 wt.% of ammelide,
- between 3 and 10 wt.% of cyanuric acid,
- between 0.1 and 1.5 wt.% of moisture,

based on the total weight of the composition.

The present inventors have further surprisingly found that specific NPN compositions for ruminant animals, comprising urea, biuret, one or more N-containing by-products of a urea condensation process or a biuret production process, and one or more nitrate compounds, have many advantages when incorporated in the diet of ruminant animals and thus are fed to the ruminant animals, i.e.

(1) as a dietary NPN-source for ruminants and at the same time to reduce methane production in ruminants.
(2) to improve the average daily gain (ADG) of ruminant animals.
(3) to improve the feed efficiency of ruminant animals.

This ruminant feed supplement composition particularly comprises:

- between 5 and 60 wt.%, more in particular between 20 and 40 wt.%, still more in particular between 25 and 35 wt.%, and most in particular between 29 and 33 wt.% of urea;
- between 2 and 60 wt.%, more in particular between 20 and 40 wt.%, still more in particular between 25 and 35 wt.%, and most in particular between 29 and 33 wt.% of biuret;
- between 20 and 40 wt.%, more in particular between 21 and 37 wt.%, and most in particular between 23.5 and 31.5 wt.% of one or more nitrate compounds.

The one or more nitrate compounds are more in particular water-soluble nitrate salts. Examples thereof are calcium nitrate, magnesium nitrate, ammonium nitrate, potassium nitrate, sodium nitrate or a combination of two or more of these.

The ruminant feed supplement composition more in particular comprises between 20 and 32 wt.% of calcium nitrate and between 1 and 5 wt.% of ammonium nitrate, more in particular between 22 and 29 wt.% of calcium nitrate and between 1.5 and 2.5 wt.% of ammonium nitrate, this based on the total weight of the composition.

It is remarked that the amount of nitrate compounds must be such that these are not toxic to the ruminant.

The ruminant feed supplement composition comprises more in particular

- between 1 and 5 wt.%, more in particular between 1.5 and 3 wt.% of triuret;
- between 0.5 and 3 wt.%, more in particular between 0.9 and 1.5 wt.% of ammelide; and
- between 3 and 7 wt.%, more in particular between 3 and 7 wt.% of cyanuric acid,

based on the total weight of the composition.

The ruminant feed supplement composition according to the present disclosure comprises more in particular between 0.1 and 4.5 wt.%, and more in particular between 0.2 and 2.5 wt.% of moisture ($H_2O$).

In certain embodiments, the one or more nutritional ingredients form a nutritionally balanced ration or a basal ration for a ruminant, as known by the skilled person.

Optionally, each of the ruminant feed supplement compositions as described above can comprises one or more anti-caking agents as generally known in the art, either incorporated in the feed supplement composition, or either as a coating, to improve handling properties and to improve the quality of the ruminant feed supplement composition.

Furthermore, it is also possible to add or combine any pre-biotics, pro-biotics, post-biotics, anti-biotics, bio stimulants known in the art for fostering / supporting the nitrogen assimilation and rumen fermentation to or with the ruminant feed supplement composition.

The disclosure as defined here above will now be illustrated and explained in more detail in the following experimental part, which is not intended to limit the scope of this disclosure anyway.

Examples

***Animals, experimental design and treatments***

A total of 72 crossbred yearling steers [303 kg $\pm$ 29 kg initial body weight (BW) were stratified by body weight (BW) and randomly allocated to three treatments. All steers consumed a basal diet of corn silage, cotton-gin trash, and a premix of vitamins and minerals.

The steers were housed in pens (8 steers / pen, 3 pens / treatment). The steers were supplemented with three different NPN-sources on an isonitrogenous basis, considering as reference the N provided by urea when included at 1 wt.% of the diet in dry matter (DM- basis.

In Table 1, the composition of the basal diet supplemented with three different types of NPN, i.e. urea (U) (46 % N, Yara International), a mixture of urea and biuret (UB) (41 % N, Yara International) and a mixture of urea, biuret and nitrate (UBN) (35 % N, 21.3 % $NO_3$, Yara International) is shown.

In order to determine DM of the feed, approximately 0.5 g of sample was weighed in duplicate, dried in a forced-air oven at 100 °C for 24 hours, and ashed at 550 °C for six hours.

For the determination of the fibrous component, samples were weighed in duplicate into F56 bags (Ankom Technology Crop., Macedon, NY) and analyzed for neutral detergent fiber (NDF), using heat-stable α-amylase and sodium sulfite, and subsequently for acid detergent fiber (ADF) as described by Van Soest et al. (1991) in Ankom 200 Fiber Analyzer (Ankom Technology Corp., Macedon, NY).

The concentration of N was analyzed through the Dumas dry combustion method using a Vario Micro Cube (Elementar, Manchester, UK) after samples were ball-milled using a Mixer Mill MM 400 (Retsch) at 25 Hz for 9 minutes.

The feed samples were analyzed for concentration of starch through the enzymatic-colorimetric method of Hall (2015) with the following modifications: glucose was analyzed using a quantitative colorimetric kit (G7521-11, Pointe Scientific Inc., Canton, MI), absorbance was read on 200 μl samples at OD520 in flat-bottom 96-well plates (Corning Costar 3361, Thermo Fisher Scientific Inc., Waltham, MA) using a plate reader (Fisherbrand UV / VIS AccuSkan GO Spectrophotometer, Thermoe Fisher Scientific Inc., Hampton, NH).

*Table 1: Composition of the basal diet supplemented with different types of NPN*

| Item | Treatment | | |
|---|---|---|---|
| | U | UB | UBN |
| Ingredient, wt.% of dry matter | | | |
|     Corn silage | 77.00 | 76.88 | 76.69 |
|     Cotton-gin trash | 20.00 | 20.00 | 20.00 |
|     Mineral | 2.00 | 2.00 | 2.00 |
|     NPN source | 1.00 | 1.12 | 1.31 |
| Composition | | | |
|     DM (dry matter), wt.% as fed | 37.13 | 36.17 | 36.97 |
|     CP (crude protein), wt. % of DM | 13.20 | 12.70 | 12.90 |
|     Sol CP, wt. % of CP | 49.00 | 53.00 | 55.00 |
|     iNDF (indigestible neutral detergent fiber) | 41.40 | 38.30 | 39.00 |
|     ADF (acid detergent fiber) | 30.10 | 29.40 | 31.00 |
|     Starch, wt.% of DM | 27.70 | 29.80 | 27.20 |
|     Ash, wt.% of DM | 5.91 | 5.78 | 6.34 |

### *Animal adaptation*

From day -17 to day -16 relative to the beginning of the experimental period, the steers received 20 % of their total supplemental NPN.

From day -15 to day -12 relative to the beginning of the experimental period, the steers received 40 % of their total supplemental NPN.

From day -11 to day -8 relative to the beginning of the experimental period, the steers received 60% of their total supplemental NPN.

From day -7 to day -3 relative to the beginning of the experimental period, the steers received 80 % of their total supplemental NPN.

From day -2 to the beginning of the experimental period (day 0), the steers received 100% of their total supplemental NPN.

### *Blood profile measurements*

Blood samples were collected every 14 days during the performance evaluation via jugular venipuncture into 10 ml evacuated tubes containing Na heparin (BD Vacutainer, Franklin Lakes, NJ) and placed on ice centrifuged at 1,500 x g for 15 minutes at 4 °C. Plasma was transferred to polypropylene tubes (12 x 75 mm, Fisherbrand, Thermo Fisher Scientific Inc, Waltham, MA) and stored at - 20 °C for further analysis.

*Enteric methane emission measurements*

When feed is eaten by a ruminant, the nutrients are initially in the form of carbohydrates, proteins and fats (or lipids). During the fermentation of the carbohydrates, carbon dioxide and methane are produced.

Methane emission weas measured in all steers for five consecutive days using the $SF_6$ tracer technique (Johnson et al., 1994; Henry et al., 2020). In this technique, the steers received a calibrated permeation tube filled with $SF_6$ (3.1 g $\pm$ 0.2 g) before the measurement period. The average $SF_6$ release rate was 5.2 g $\pm$ 1.1 mg/d. After five days of training, a vacuum gas collector canister was attached to each animal to collect a sample of daily gas production. Each day at the same hour, a new vacuum canister was replaced throughout the five days of the measurement period. Five collection canisters were used to determine environmental $CH_4$ and $SF_6$ concentrations. A gas sample was taken from each canister and conserved in 120 ml bottles for posterior analysis of $CH_4$ and $SF_6$ using gas chromatography. For the current experiment, only steers with a least three successful days of collection and measurement were considered in the final analysis. Gas samples were analyzed by gas chromatography (Agilent 7820A GC, Agilent Technologies, Palo Alto, CA). A flame ionization and electron capture detector were used for $CH_4$ and $SF_6$ analysis, respectively, with a capillary column (Plot Fused Silica 25 m x 0.32 mm, Coating Molsieve 5A, Varian CP7536, Varian Inc., Lake Forest, CA). The injector, column and detector temperatures for $CH_4$ analysis were 80, 160 and 200 °C, respectively. For $SF_6$, temperatures were 50, 30 and 300 °C for the injector, the column and the detector, respectively. The carrier gas for $CH_4$ and $SF_6$ was $N_2$. The emissions of $CH_4$ were calculated according to the next equation:

$$QCH_4 = QSF_6 \; x \; \frac{([CH_4]\gamma - [CH_4]\beta)}{([SF_6]\gamma - [SF_6]\beta)}$$

$QCH_4$ = $CH_4$ emissions per animal (g / day)
$QSF_6$ = $SF_6$ release rate (mg / day)
$[CH_4]\gamma$ = the concentration of $CH_4$ in the animals' collection canister
$[CH_4]\beta$ = the concentration of $CH_4$ in the environmental collection canister
$[SF_6]\gamma$ = the concentration of $SF_6$ in the animals' collection canister
$[SF_6]\beta$ = the concentration of $SF_6$ in the environmental collection canister

*Gain to feed ratio*

The gain to feed ratio (G:F) was computed as the ratio of the average daily gain (ADG) to daily dry matter intake (DMI). The feed intake was recorded daily. The individual intake was determined via the GrowSafe® intake monitoring system. In cattle management, GrowSafe Systems is a commonly used tool to closely monitor individual animal feeding data using radio frequency identification (RFID) tag technology. The animals are equipped with a unique RFID tag that is read by the feed bunks each time the animal lowers its head into the bunk to consume feed. Average daily weight gain (ADG) and feed efficiency were calculated during the performance evaluation. The ADG was determined by the difference between the final BW and the initial BW divided by the number of days of the performance evaluation (56 days). The initial BW was calculated as the average unshrunk BW of heifers on days 16 and 17. The final BW was the average unshrunk BW measured on days 72 and 73. The unshrunk BW was obtained every 14 days.

*Effect of NPN supplementation on animal performance and plasma urea nitrogen (PUN)*

In Table 2, the effect of NPN supplementation with U, UB and UBN on growth performance is shown. More in particular, the initial and the final BW and the ADG, all expressed in kg, the dry matter intake (DMI) expressed in kg / day and in percentage of BW, the gain to feed ratio (G:F) expressed in kg / kg, the net energy of gain (NEg) expressed in Mcal / kg of DM and the plasma urea nitrogen (PUN) expressed in m / dL are shown.

*Table 2: Effect of NPN supplementation on animal performance and the plasma urea nitrogen (PUN)*

| Item | Treatment | | |
|---|---|---|---|
| | U | UB | UBN |
| Initial BW (kg) | 288.69 | 283.18 | 289.92 |
| Final BW (kg) | 343.69 | 342.11 | 349.48 |

(continued)

| Item | Treatment | | |
|---|---|---|---|
| | U | UB | UBN |
| ADG (kg) | | | |
| 0-14 | 0.78 | 0.72 | 0.75 |
| 0-28 | 0.81 | 0.72 | 0.96 |
| 0-42 | 1.02 | 1.04 | 1.12 |
| 0-56 | 1.01 | 1.05 | 1.05 |
| DMI (kg / day) | | | |
| 0-14 | 6.82 | 6.91 | 6.89 |
| 0-28 | 7.03 | 7.40 | 7.29 |
| 0-42 | 7.24 | 7.85 | 7.55 |
| 0-56 | 7.29 | 7.98 | 7.52 |
| DMI (% of BW) | 2.31 | 2.54 | 2.34 |
| G:F (kg / kg) | | | |
| 0-14 | 0.10 | 0.10 | 0.10 |
| 0-28 | 0.11 | 0.10 | 0.13 |
| 0-42 | 0.14 | 0.13 | 0.15 |
| 0-56 | 0.14 | 0.13 | 0.14 |
| NEg (Mcal / kg of DM) | 0.55 | 0.52 | 0.55 |
| PUN (mg / dL) | | | |
| 0 | 7.80 | 7.59 | 6.81 |
| 14 | 6.76 | 7.52 | 7.18 |
| 28 | 10.41 | 8.78 | 7.73 |
| 42 | 9.25 | 7.55 | 7.65 |
| 56 | 8.20 | 8.60 | 8.01 |

Out of Table 2, it can be concluded that

- the supplementation with UBN showed the greatest ADG compared with the supplementation with U and UB during the first 28 days;
- the supplementation with UB showed the greatest DMI expressed per unit of BW;
- the G:F ratio was the greatest for UBN during the first 28 days.

*Effect of NPN supplementation on enteric emissions of beef steers*

Methane is an energy loss representing between 2 % and 12 % of the gross energy intake in ruminants. Nitrates reduction is energetically more efficient than CH4 synthesis and competes for $H_2$ during the ruminal fermentation, and nitrates formed during the nitrate reduction affect some bacteria and methanogen population resulting in lower $CH_4$ emissions. The $CH_4$ reduction can thus improve animal performance because of the reallocation of the energy into productive fates like protein accretion. In this regard, it has been reported that there was a greater energy retention when animals received nitrates in the diet.

In Table 3, the effect of the NPN supplementation with U, UB and UBN on enteric methane emission of beef steers is shown. More in particular, the intake expressed in kg / day, and the methane emission expressed in g / kg DMI, g / kg OMI and g/ kg ADG are shown.

Table 3: Effect of NPN supplementation on enteric methane emission of beef steers

| Item | Treatment | | |
|---|---|---|---|
| | U | UB | UBN |
| DM intake (kg / day) | 6.08 | 7.11 | 6.30 |
| Methane emission | | | |
| (g / kg DMI) | 36.59 | 31.21 | 33.93 |
| (g / kg OMI) | 38.68 | 32.94 | 36.02 |
| (g / kg ADG) | 213.79 | 212.31 | 206.52 |

Out of Table 3, it can be concluded that supplementing the diet of yearling steers with UB or UBN reduced methane emission without compromising or even improving their performance.

**Claims**

1. Use of a ruminant feed supplement composition comprising urea, biuret and N-containing by-products of the biuret production out of urea, as a NPN-source to reduce methane emission produced by ruminant animals.

2. Use of a ruminant feed supplement composition comprising urea, biuret and N-containing by-products of the biuret production out of urea as a NPN-source to improve the dry matter intake (DMI) of ruminant animals.

3. Use according to claim 1 or 2, wherein the composition comprises

   between 30 and 60 wt.% of urea and between 30 and 60 wt.% of biuret,
   particularly between 35 and 55 wt.% of urea and between 35 and 50 wt.% of biuret, and most particularly between 37 and 52 wt.% of urea and between 39 and 46 wt./% of biuret, based on the total weight of the composition.

4. Use according to any one of claims 1 to 3, wherein the composition comprises between 5 and 30 wt.% of N-containing by-products of the biuret production out of urea, based on the total weight of the composition,

5. Use according to any one of claims 1 to 4, wherein the composition further comprises

   - between 2.5 and 8 wt.% of triuret, and / or
   - between 0.1 and 5 wt.% of ammelide, and / or
   - between 2.5 and 15 wt.% of cyanuric acid, and
   - between 0.1 and 2.0 wt.% of moisture,

   based on the total weight of the composition.

6. Use of a ruminant feed supplement composition comprising urea, biuret and a nitrate compound as a NPN-source to improve nitrogen nutrition and to reduce methane emission of ruminant animals.

7. Use of a ruminant feed supplement composition comprising urea, biuret, N-containing by-products of the biuret production out of urea, and a nitrate compound to improve the average daily gain (ADG) of ruminant animals.

8. Use of a ruminant feed supplement composition comprising urea, biuret, N-containing by-products of the biuret production out of urea, and a nitrate compound to improve the feed efficiency of ruminant animals.

9. Use of a ruminant feed supplement composition according to any one of claims 6 to 8, wherein the composition comprises

   between 5 and 60 wt.% of urea, between 2 and 60 wt.% of biuret and between 21 and 37 wt.% of one or more nitrate compounds,

more in particular between 20 and 40 wt.% of urea, between 20 and 40 wt.% of biuret and between 21 and 37 wt.% of one or more nitrate compounds, and

most in particular between 25 and 35 wt.% of urea, between 25 and 35 wt.% of biuret and between 23.5 and 31.5 wt.% of one or more nitrate compounds,

based on the total weight of the composition.

10. Use according to any one of claims 6 to 9, wherein the one or more nitrate compounds are water-soluble nitrate salts.

11. Use according to claim 10, wherein the water-soluble nitrate salts are chosen out of calcium nitrate, magnesium nitrate, ammonium nitrate, potassium nitrate and / or sodium nitrate.

12. Use according to claim 11, wherein the composition comprises between 20 and 32 wt.% of calcium nitrate and between 1 and 5 wt.% of ammonium nitrate, based on the total weight of the composition.

13. Use according to any one of claims 6 to 12, wherein the composition comprises

- between 1 and 5 wt.% of triuret,
- between 0.5 and 3 wt.% of ammelide,
- between 3 and 30 wt.% of cyanuric acid;
- between 0.1 and 4.5 wt.% of moisture,

based on the total weight of the composition.

FIG. 1

Europäisches
Patentamt
European
Patent Office
Office européen
des brevets

# EUROPEAN SEARCH REPORT

**Application Number**

EP 22 38 2836

## DOCUMENTS CONSIDERED TO BE RELEVANT

| Category | Citation of document with indication, where appropriate, of relevant passages | Relevant to claim |
|---|---|---|
| X | US 2 768 895 A (JONAS KAMLET) 30 October 1956 (1956-10-30) | 7-13 |
| A | * claims; examples 2,3 * | 1-6 |
| A | CA 1 241 663 A (MOORMAN MFG CO) 6 September 1988 (1988-09-06) * claims; examples 7-9 * | 1-13 |
| A | XIUMIN ZHANG ET AL: "Effects of urea plus nitrate pretreated rice straw and corn oil supplementation on fiber digestibility, nitrogen balance, rumen fermentation, microbiota and methane emissions in goats", JOURNAL OF ANIMAL SCIENCE AND BIOTECHNOLOGY, BIOMED CENTRAL LTD, LONDON, UK, vol. 10, no. 1, 23 January 2019 (2019-01-23), pages 1-10, XP021270875, DOI: 10.1186/S40104-019-0312-2 * tables 3-5 * * abstract * | 1-13 |
| A | VAN WYNGAARD J D V ET AL: "Effect of dietary nitrate on enteric methane emissions, production performance and rumen fermentation of dairy cows grazing kikuyu-dominant pasture during summer", ANIMAL FEED SCIENCE AND TECHNOLOGY, ELSEVIER, AMSTERDAM, NL, vol. 244, 13 August 2018 (2018-08-13), pages 76-87, XP085471303, ISSN: 0377-8401, DOI: 10.1016/J.ANIFEEDSCI.2018.08.005 * tables 4,5 * * abstract * | 1-13 |

-/--

**CLASSIFICATION OF THE APPLICATION (IPC)**

INV.
A23K20/105
A23K20/20
A23K20/24
A23K50/15
A23K20/111
A23K20/137
A23K20/22
A23K50/10

**TECHNICAL FIELDS SEARCHED (IPC)**

A23K

The present search report has been drawn up for all claims

| Place of search | Date of completion of the search | Examiner |
|---|---|---|
| The Hague | 22 June 2023 | Saettel, Damien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

## EUROPEAN SEARCH REPORT

Europäisches Patentamt
European Patent Office
Office européen des brevets

**Application Number**

EP 22 38 2836

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CA 976 189 A (AFRICAN EXPLOSIVES & CHEM) 14 October 1975 (1975-10-14) * the whole document * ----- | 1-13 | |
| A | US 3 878 304 A (MOORE WILLIAM PERCY) 15 April 1975 (1975-04-15) * the whole document * ----- | 1-13 | |
| A | LT 6 282 B (UAB NAUJASIS NEVEZIS [LT]) 25 July 2016 (2016-07-25) * claims * ----- | 1-13 | |

**TECHNICAL FIELDS SEARCHED (IPC)**

The present search report has been drawn up for all claims

| Place of search | Date of completion of the search | Examiner |
|---|---|---|
| The Hague | 22 June 2023 | Saettel, Damien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 22 38 2836

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2023

| Patent document cited in search report | | Publication date | Patent family member(s) | | Publication date |
|---|---|---|---|---|---|
| US 2768895 | A | 30-10-1956 | NONE | | |
| CA 1241663 | A | 06-09-1988 | NONE | | |
| CA 976189 | A | 14-10-1975 | AU | 451816 B2 | 22-08-1974 |
| | | | CA | 976189 A | 14-10-1975 |
| | | | DE | 2152550 A1 | 27-04-1972 |
| | | | ES | 396245 A1 | 16-04-1974 |
| | | | FR | 2113063 A5 | 23-06-1972 |
| | | | GB | 1324738 A | 25-07-1973 |
| | | | JP | S516052 B1 | 25-02-1976 |
| | | | NL | 7114489 A | 25-04-1972 |
| | | | ZA | 707156 B | 28-06-1972 |
| US 3878304 | A | 15-04-1975 | NONE | | |
| LT 6282 | B | 25-07-2016 | NONE | | |

For more details about this annex : see Official Journal of the European Patent Office, No. 12/82